# EUROPÄISCHE PATENTSCHRIFT

(11) **EP 1 626 879 B1**
(45) Veröffentlichungstag und Bekanntmachung des Hinweises auf die Patenterteilung: **02.12.2009**
(21) Anmeldenummer: 04733309.1
(22) Anmeldetag: 17.05.2004
(51) Int. Cl.: B60N 2/44, B60N 2/68, B60N 2/06, B60N 2/18, B60N 2/22

(54) **BESCHLAGSYSTEM FÜR EINEN FAHRZEUGSITZ**
FITTING SYSTEM FOR A VEHICLE SEAT
SYSTEME DE FERRURES POUR SIEGE DE VEHICULE

(30) Priorität: 23.05.2003 DE 10323450
(43) Veröffentlichungstag der Anmeldung: 22.02.2006
(73) Patentinhaber: KEIPER GmbH & Co. KG, 67657 Kaiserslautern (DE)
(72) Erfinder: MESSERSCHMIDT, Rainer, 40211 Düsseldorf (DE); SCHÜLER, Rolf, 42579 Heiligenhaus (DE)
(74) Vertreter: Patentanwälte Hosenthien-Held und Dr. Held
(86) Internationale Anmeldenummer: PCT/EP2004/005267
(87) Internationale Veröffentlichungsnummer: WO 2004/103766

(56) Entgegenhaltungen:
- EP-A- 0 068 960
- DE-A- 10 105 282
- FR-A- 2 305 633

## Beschreibung

Die Erfindung betrifft ein Beschlagsystem für einen Fahrzeugsitz, insbesondere für einen Kraftfahrzeugsitz, mit den Merkmalen des Oberbegriffs des Anspruches 1.

In der DE 101 05 282 A1 ist ein Beschlagsystem dieser Art offenbart, bei welchem ein Beschlagteil in den Umklammerungsring eingepresst ist, welcher zugleich das andere Beschlagteil umklammert und somit für den axialen und radialen Zusammenhalt sorgt. Der so vorbereitete Beschlag ist dann mit dem Strukturteil laserverschweisst, wodurch der Umklammerungsring in das Strukturteil integriert wird. Die EP 0 068 960 A1 und die FR 2 305 633 A zeigen Beschlagsysteme, bei denen Laschen, die aus den Beschlagteilen, Adaptern oder Strukturteilen herausgebogen sind, für einen axialen und radialen Zusammenhalt der Beschlagteile sorgen.

Der Erfindung liegt die Aufgabe zu Grunde, ein Beschlagsystem der eingangs genannten Art zu verbessern. Diese Aufgabe wird erfindungsgemäß durch ein Beschlagsystem mit den Merkmalen des Anspruches 1 gelöst. Vorteilhafte Ausgestaltungen sind Gegenstand der Unteransprüche.

Dadurch, dass das Strukturteil eine topfförmige Aufnahme aufweist, welche den Beschlag aufnimmt, wobei ein umlaufender Wandbereich der Aufnahme den einstückig mit dem Strukturteil ausgebildeten Umklammerungsring bildet, wird der Umklammerungsring auf einfache Weise ausgebildet. Die Aufnahme kann mit diesem Wandbereich den aufgenommenen Beschlag radial zusammenhalten. Eine für die Funktionsfähigkeit nicht notwendige Materialdoppelung vermieden werden, d.h. ein Bauteil eingespart werden. Dies macht das Beschlagsystem kostengünstiger und verringert das Gewicht. Zudem vereinfacht sich der Zusammenbau des Beschlagsystems um einen Prozessschritt, was die Herstellungskosten ebenfalls senkt.

Die Aufnahme ist mit gleichzeitiger Ausbildung des Umklammerungsringes durch Tiefziehen hergestellt. Eines der Beschlagteile ist vorzugsweise in den Umklammerungsring eingepreßt und mit dem Strukturteil vorzugsweise laserverschweißt, was auch die Möglichkeit eines Verschweißens mit dem Umklammerungsring einschließen soll. Das andere Beschlagteil kann beispielsweise durch eine Aussparung im Boden der Aufnahme zugänglich sein, so dass die Anbringung von Adaptern möglich ist, beispielsweise für eine Quertraverse des Sitzrahmens, für die Lehne oder für einen Antrieb eines Einstellers.

Das erfindungsgemäße Beschlagsystem ist prinzipiell für alle Fahrzeugsitze mit Einstellem, wie Sitzneigungseinsteller, Sitzhöheneinsteller und/oder Lehnenneigungseinsteller, einsetzbar. Die innere Ausbildung des Beschlags als Rastbeschlag oder Getriebebeschlag ist vorliegend unerheblich.

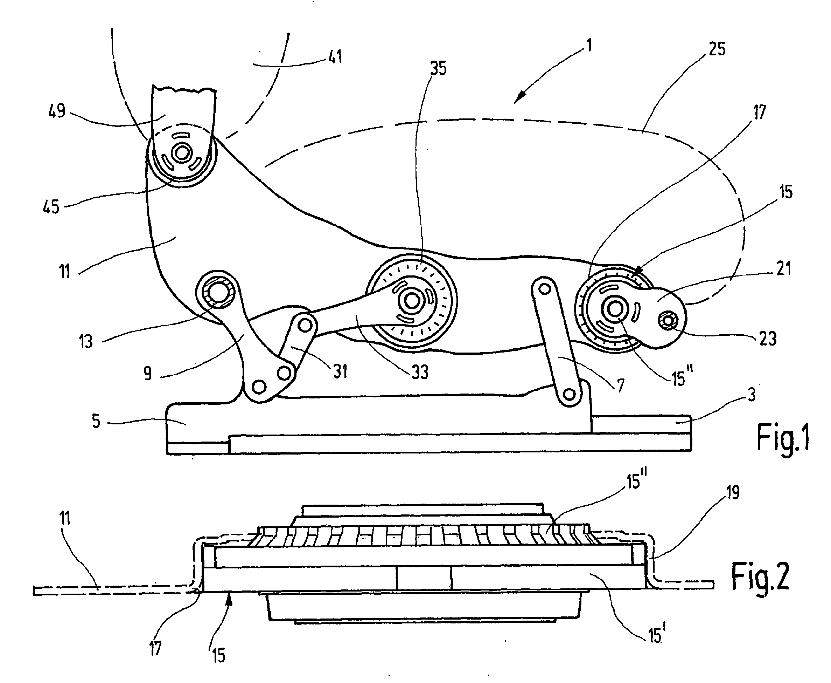

Im folgenden ist die Erfindung anhand eines in der Zeichnung dargestellten Ausführungsbeispiels näher erläutert. Es zeigen
- Fig. 1: eine teilweise geschnitten dargestellte Ansicht der Innenseite des Ausführungsbeispiels mit maximaler Sitzhöhe, wobei die Polsterung nur angedeutet ist,
- Fig. 2: eine teilweise geschnitten dargestellte Untersicht des ersten Beschlags und des Strukturteils, und

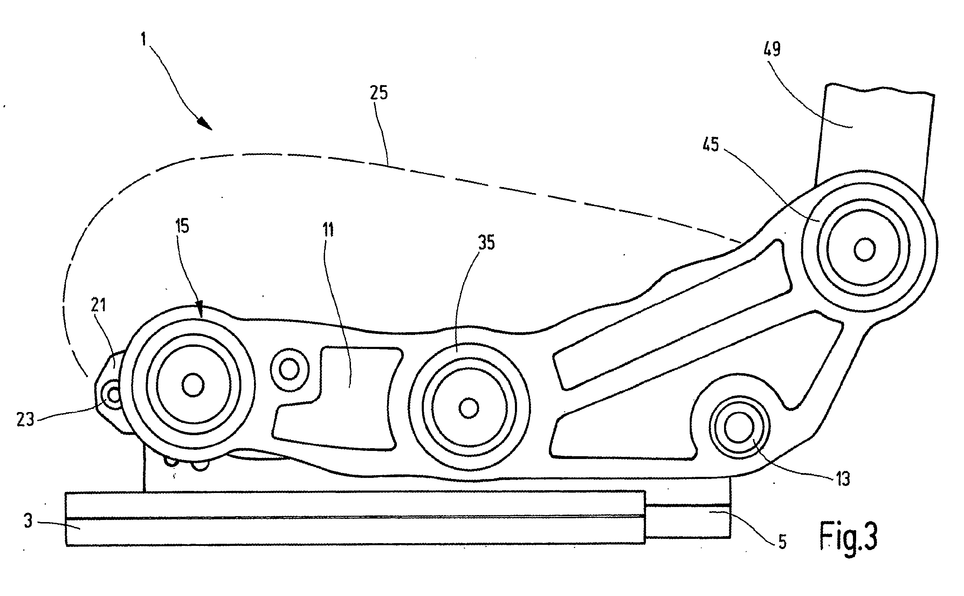

- Fig. 3: eine Ansicht der Außenseite des Ausfiihrungsbeispiels mit minimaler Sitzhöhe, wobei die Polsterung nur angedeutet ist.

Das beispielhafte Beschlagsystem ist für einen Fahrzeugsitz 1 eines Kraftfahrzeuges vorgesehen. Der Fahrzeugsitz 1 weist auf beiden Fahrzeugsitzseiten eine fahrzeugstrukturfeste erste Sitzschiene 3 als Führungsschiene und eine zweite Sitzschiene 5 als Gleitschiene auf, welche in der ersten Sitzschiene 3 in Sitzlängsrichtung verschieblich geführt ist. Am vorderen Ende der zweiten Sitzschiene 5 ist eine vordere Schwinge 7 und am hinteren Ende der zweiten Sitzschiene 5 eine hintere Schwinge 9 angelenkt. Die vorderen und hinteren Schwingen 7 und 9 sind auch im Bereich des vorderen bzw. hinteren Endes eines Sitzrahmen-Seitenteils angelenkt, welches im folgenden kurz als Strukturteil 11 bezeichnet ist. Die zweite Sitzschiene 5, die beide Schwingen 7 und 9 und das Strukturteil 11 definieren ein Viergelenk.

Eine rohrförmige, hintere Quertraverse 13 verbindet die hinteren Enden der beiden Strukturteile 11 fest miteinander, wobei die Anlenkung der hinteren Schwinge 9 am Strukturteil 11 dadurch erfolgt, daß die hintere Schwinge 9 drehbar auf der hinteren Quertraverse 13 gelagert ist. Ein erster Beschlag 15 ist als Sitzneigungseinsteller am vorderen Ende des im Ausführungsbeispiels linken Strukturteils 11 angeordnet. Der erste Beschlag 15 besteht im wesentlichen aus zwei im wesentlichen scheibenförmigen, relativ zueinander verdrehbaren Beschlagteilen 15' und 15", die für den Transport und den Normalgebrauch durch ein zentrales Klammerelement axial zusammengehalten werden. Bei einer Ausbildung des ersten Beschlags 15 als Rastbeschlag sind die beiden Beschlagteile 15' und 15" miteinander verriegelbar, während sie bei einer Ausbildung des ersten Beschlags 15 als Getriebebeschlag miteinander in selbsthemmender Getriebeverbindung stehen.

Im Strukturteil 11 ist eine topfförmige Aufnahme 17 mit kreisförmigem Querschnitt und teilweise ausgespartem Boden durch Tiefziehen ausgebildet, welche den ersten Beschlag 15 aufnimmt. Dabei ist der umlaufende Wandbereich der Aufnahme 17 als integrierter Umklammerungsring 19 ausgebildet, in welchen das erste Beschlagteil 15' des ersten Beschlags 15 eingepreßt ist, so daß es für den Normalgebrauch fixiert ist. Dabei ist der Umklammerungsring 19 entlang des Außenumfangs des Beschlags 15 bzw. der beiden Beschlagteile 15' und 15" angeordnet, also radial außen bezüglich der beiden Beschlagteile 15' und 15". Das zuerst in die Aufnahme 17 eingeführte zweite Beschlagteil 15" bleibt frei drehbar und ragt teilweise durch die Aussparung im Boden der Aufnahme 17 hindurch, d.h. der Umklammerungsring 19 hält die beiden Beschlagteile 15' und 15" in axialer Richtung zusätzlich zusammen. Zur Verstärkung, insbesondere zur Aufnahme und Weiterleitung von Crashkräften, sind das erste Beschlagteil 15' und der einstückig mit dem Strukturteil 11 ausgebildete Umklammerungsring 19 zusätzlich miteinander laserverschweißt..

Das zweite Beschlagteil 15" ragt auf der vom ersten Beschlagteil 15' abgewandten Seite durch die Aussparung im Boden der Aufnahme 17. An dem auf diese Weise zugänglichen zweiten Beschlagteil 15" ist ein Adapter 21 angeschweißt. An dem im Ausführungsbeispiel rechten Strukturteil 11 ist anstelle des ersten Beschlags 15 ein entsprechendes Gelenk mit einem entsprechenden Adapter und einer Kompensationsfeder angeordnet. Die beiden Adapter sind durch eine rohrförmige, vordere Quertraverse 23 fest miteinander verbunden. Die beiden Strukturteile 11 und die beiden Quertraversen 13 und 23 definieren zusammen einen umlaufenden Sitzrahmen. Eine nicht näher dargestellte Sitzschale ist zwischen den beiden Quertraversen 13 und 23 eingehängt und trägt ein in der Zeichnung nur angedeutetes Sitzkissen 25. Durch eine Schwenkbewegung des ersten Beschlags 15 läßt sich die Neigung des Sitzkissens 25 und damit die Neigung der Sitzfläche einstellen.

An der hinteren Schwinge 9 ist ein erster Hebel 31 angelenkt, an welchem wiederum ein zweiter Hebel 33 angelenkt ist. Ungefähr in der Mitte des linken Strukturteils 11 ist als Sitzhöheneinsteller ein zweiter Beschlag 35 angeordnet, der wie der erste Beschlag 15 ausgebildet ist. Wie im Falle des ersten Beschlags 15 wird der zweite Beschlag 35 von einer im Strukturteil 11 ausgebildeten Aufnahme aufgenommen, wobei der umlaufende Wandbereich als Umklammerungsring ausgebildet ist, in welchen das erste Beschlagteil des zweiten Beschlags 35 eingepreßt und mit welchem dieses laserverschweißt ist. Am zweiten Beschlagteil des zweiten Beschlags 35 ist der zweite Hebel 33 auf die gleiche Weise angebracht wie der Adapter 21 am ersten Beschlag 15. Durch eine Schwenkbewegung des zweiten Beschlags 35 wird über das aus den beiden Hebeln 31 und 33 bestehende Hebelgetriebe die hintere Schwinge 9 bewegt, wodurch sich das Viergelenk aufrichtet oder absenkt, d.h. die Höhe des Sitzkissens 25 und damit der Sitzfläche eingestellt wird.

Am hinteren Ende des Strukturteils 11 ist die Lehne 41 angeordnet. Für die Lehnenneigungseinstellung ist ein dritter Beschlag 45 vorgesehen, welcher wie die beiden anderen Beschläge 15 und 35 ausgebildet ist. Wie in diesen Fällen wird der dritte Beschlag 45 von einer im Strukturteil 11 ausgebildeten Aufnahme aufgenommen, wobei der umlaufende Wandbereich als Umklammerungsring ausgebildet ist, in welchen das erste Beschlagteil des dritten Beschlags 45 eingepreßt und mit welchem dieses laserverschweißt ist. Am zweiten Beschlagteil des dritten Beschlags 45 ist ein Lehnenadapter 49 auf die gleiche Weise angebracht wie der Adapter 21 am ersten Beschlag 15, wobei am Lehnenadapter 49 die Struktur der Lehne 41, d.h. der Lehnenrahmen angebracht ist. Alternativ kann auch der Lehnenrahmen direkt an diesem zweiten Beschlagteil des dritten Beschlags 45 angebracht sein. Durch eine Schwenkbewegung des dritten Beschlags 45 wird die Lehne 41 in ihrer Neigung eingestellt.

Bei der Herstellung des Strukturteils 11 aus einem gewalzten Stahlblech können nach dem Prinzip der sogenannten "Rolled Blanks" die Walzen quer zu der durch die Bewegungsrichtung des durchgeführten Blechs definierten Längsrichtung so bewegt werden, daß die Materialstärke des Blechs nicht homogen ist, sondern sich entlang der Längsrichtung ändert. Dies führt im einfachsten Fall zu einem keilförmigen Profil in Längsrichtung. Es können aber auch näherungsweise wellenförmige Profile oder kleine Sprünge erzeugt werden. Vorliegend ist die Form so gewählt, daß beim Ausstanzen des Strukturteils 11 die Bereiche mit den Umklammerungsringen 19, also die Aufnahmen 17 mit ihren Randbereichen, gegebenenfalls auch bis zum Rand des Strukturteils 11 hin, eine größere Materialstärke aufweisen, während die weiteren Bereiche des Strukturteils 11, also die Bereiche zwischen den Aufnahmen 17, mit einer geringeren Materialstärke ausgebildet werden, jeweils mit einem kontinuierlichen Materialstärkenübergang dazwischen. Mit der (lokal) größeren Materialstärke können im Crashfall die Kräfte besser aufgenommen und weitergeleitet werden.

In einer abgewandelten Ausführungsform dient der Lehnenadapter oder Lehnenrahmen als erfindungsgemäßes Strukturteil, an welchem die Aufnahme für den dritten Beschlag 45 ausgebildet ist, in deren integrierten Umklammerungsring das erste Beschlagteil eingepreßt und laserverschweißt ist, während das zweite Beschlagteil an dem Sitzrahmen-Seitenteil angebracht ist.

Auch hier kann nach dem Prinzip der "Rolled Blanks" der Bereich mit dem Umklammerungsring für den dritten Beschlag 45, also das untere Ende des Lehnenrahmens, mit einer größeren Materialstärke ausgebildet werden, die zum oberen Ende des Lehnenrahmens hin kontinuierlich abnimmt.

### Bezugszeichenliste

- 1: Fahrzeugsitz
- 3: erste Sitzschiene
- 5: zweite Sitzschiene
- 7: vordere Schwinge
- 9: hintere Schwinge
- 11: Strukturteil
- 13: hintere Quertraverse
- 15: erster Beschlag
- 15': erstes Beschlagteil
- 15": zweites Beschlagteil
- 17: Aufnahme
- 19: Umklammerungsring
- 21: Adapter
- 23: vordere Quertraverse
- 25: Sitzkissen
- 31: erster Hebel
- 33: zweiter Hebel
- 35: zweiter Beschlag
- 41: Lehne
- 45: dritter Beschlag
- 49: Lehnenadapter

## Patentansprüche

1. Beschlagsystem für einen Fahrzeugsitz, insbesondere für einen Kraftfahrzeugsitz, mit wenigstens einem Beschlag (15, 35, 45), dessen im wesentlichen scheibenförmige, relativ zueinander verdrehbare Beschlagteile (15', 15") ein entlang des Umfangs angeordneter Umklammerungsring (19) axial zusammenhält, und einem Strukturteil (11, 49), an welchem der Beschlag (15, 35, 45) anzubringen ist, wobei der Umklammerungsring (19) im Strukturteil (11, 49) integriert ausgebildet ist, **dadurch gekennzeichnet, dass** das Strukturteil (11) eine topfförmige Aufnahme (17) aufweist, welche den Beschlag (15) aufnimmt, wobei ein umlaufender Wandbereich der Aufnahme (17) den einstückig mit dem Strukturteil (11, 49) ausgebildeten Umklammerungsring (19) bildet und die Aufnahme (17) im Strukturteil (11, 49) durch Tiefziehen mit gleichzeitiger Ausbildung des Umklammerungsringes (19) hergestellt ist.

2. Beschlagsystem nach Anspruch 1, **dadurch gekennzeichnet, dass** ein erstes Beschlagteil (15') des Beschlags (15) in den Umklammerungsring (19) eingepresst ist.

3. Beschlagsystem nach Anspruch 2, **dadurch gekennzeichnet, dass** das erste Beschlagteil (15') mit dem Strukturteil (11) laserverschweist ist.

4. Beschlagsystem nach einem der vorhergehenden Ansprüche, **dadurch gekennzeichnet, dass** ein zweites Beschlagteil (15") des Beschlags (15) durch eine Aussparung im Boden der Aufnahme (17) zugänglich ist.

5. Beschlagsystem nach einem der vorhergehenden Ansprüche, **dadurch gekennzeichnet, dass** das Strukturteil (11) im Bereich des Umklammerungsrings (19) eine größere Materialstärke aufweist als in den weiteren Bereichen.

6. Beschlagsystem nach einem der vorhergehenden Ansprüche, **dadurch gekennzeichnet, dass** der Beschlag (15, 35, 45) als Rastbeschlag oder Getriebebeschlag ausgebildet ist und als Sitzneigungseinsteller, Sitzhöheneinsteller und/oder Lehnenneigungseinsteller dient.

7. Fahrzeugsitz, insbesondere Kraftfahrzeugsitz, **gekennzeichnet durch** ein Beschlagsystem nach einem der vorhergehenden Ansprüche.

## Claims

1. A fitting system for a vehicle seat, in particular for a motor vehicle seat, having at least one fitting (15, 35, 45), the fitting parts (15', 15") of which, which are essentially disk-shaped and can be rotated relative to each other, are axially held together by a clutch ring (19) arranged along the periphery, and having a structural part (11, 49) on which the fitting (15, 35, 45) is to be fixed, wherein the clutch ring (19) in integrally formed with the structural part (11, 49), **characterized in that** the structural part (11) comprises a cup-shaped receptacle (17) that receives the fitting (15), an encircling wall region of the receptacle (17) defining the clutch ring (19) integrally formed with the structural part (11, 49), and the receptacle (17) in the structural part (11, 49) is formed, with simultaneous formation of the clutch ring (19), by deep-drawing.

2. The fitting system according to claim 1, **characterized in that** a first fitting part (15') of the fitting (15) is pressed into the clutch ring (19).

3. The fitting system according to claim 2, **characterized in that** the first fitting part (15') is laser-welded to the structural part (11).

4. The fitting system according to any one of the preceding claims, **characterized that** a second fitting part (15") of the fitting (15) is accessible through a cut-out in the base of the receptacle (17).

5. The fitting system according to any one of the preceding claims, **characterized in that** the structural part (11) has a greater material thickness in the region of the clutch ring (19) than in the further regions.

6. The fitting system according to any of the preceding claims, **characterized in that** the fitting (15, 35, 45) is designed as a latching fitting or geared fitting and is used as a seat inclination adjuster, seat height adjuster and/or backrest inclination adjuster.

7. A vehicle seat, in particular motor vehicle seat, **characterized by** a fitting system according to any one of the preceding claims.

## Revendications

1. Système d'armature pour un siège de véhicule, en particulier pour un siège de véhicule automobile, avec au moins une ferrure (15, 35, 45), dont les parties d'armature (15', 15"), sensiblement en forme de disque et aptes à tourner l'une par rapport à l'autre, sont maintenues assemblées axialement par une bague de serrage (19) disposée sur leur périphérie, et un élément de structure (11, 49) sur lequel doit être montée l'armature (15, 35, 45), la bague de serrage (19) étant réalisée intégrée à l'élément de structure (11, 49), **caractérisé par le fait que** l'élément de structure (11) possède un logement (17) en forme de pot qui reçoit l'armature (15), une zone de paroi périphérique du logement (17) formant la bague de serrage (19) faite d'une pièce avec l'élément de structure (11, 49), et le logement (17) dans l'élément de structure (11, 49) étant fabriqué par emboutissage profond avec formage simultané de la bague de serrage (19).

2. Système d'armature selon la revendication 1, **caractérisé par le fait qu'**un premier élément d'armature (15') de l'armature (15) est monté en force dans la bague de serrage (19).

3. Système d'armature selon la revendication 2, **caractérisé par le fait que** le premier élément d'armature (15') est soudé au laser sur l'élément de structure (11).

4. Système d'armature selon l'une des revendications précédentes, **caractérisé par le fait qu'**un deuxième élément d'armature (15") de l'armature (15) est accessible par une ouverture dans le fond du logement (17).

5. Système d'armature selon l'une des revendications précédentes, **caractérisé par le fait que** l'élément de structure (11) possède dans la zone de la bague de serrage (19) une épaisseur de matériau supérieure à celle des autres zones.

6. Système d'armature selon l'une des revendications précédentes, **caractérisé par le fait que** l'armature (15, 35, 45) est configurée en armature à encliquetage ou armature à transmission et sert de moyen de réglage de l'inclinaison du siège, de moyen de réglage de la hauteur du siège et/ou de moyen de réglage de l'inclinaison du dossier.

7. Siège de véhicule, en particulier siège de véhicule automobile, **caractérisé par** un système d'armature selon l'une des revendications précédentes.
